# EUROPÄISCHE PATENTSCHRIFT

(11) **EP 0 676 259 B1**
(45) Veröffentlichungstag und Bekanntmachung des Hinweises auf die Patenterteilung: **27.01.1999**
(21) Anmeldenummer: 95104351.2
(22) Anmeldetag: 24.03.1995
(51) Int. Cl.: B23P 6/00, F01D 5/00, C23C 4/00, F01D 5/28

(54) **Verfahren zur Reparatur von Fehlstellen in Bauteiloberflächen**
Method of repairing surface defects of pieces
Procédé pour la réparation des défauts sur la surface des éléments

(30) Priorität: 05.04.1994 DE 4411680
(43) Veröffentlichungstag der Anmeldung: 11.10.1995
(73) Patentinhaber: MTU MOTOREN- UND TURBINEN-UNION MÜNCHEN GMBH, 80976 München (DE)
(72) Erfinder: Platz, Albin, D-86510 Ried-Baindlkirch (DE); Wurmseder, Georg, D-85250 Altomünster (DE)
(74) Vertreter: Baum, Wolfgang, Dipl.-Ing.

(56) Entgegenhaltungen:
- DE-A- 3 325 251
- DE-C- 4 226 272
- GB-A- 751 863
- PATENT ABSTRACTS OF JAPAN vol. 16 no. 198 (C-0939) ,13.Mai 1992 & JP-A-04 032546 (MITSUBISHI) 4.Februar 1992,
- BROWN BOVERI REVIEW, Bd. 74, Nr. 10, Oktober 1987 BADEN CH, Seiten 593-599, R. BÜRGEL ET AL 'Experience gained refurbishing gas turbine blades'
- PATENT ABSTRACTS OF JAPAN vol. 10 no. 134 (M-479) ,17.Mai 1986 & JP-A-60 259706 (HITACHI) 21.Dezember 1985,

## Beschreibung

Die Erfindung betrifft ein Verfahren zur Nachbearbeitung und Reparatur von Fehlstellen in Bauteiloberflächen von Triebwerksteilen, die dem Heißgasstrom ausgesetzt sind und die mit Heißgaskorrosionsschutzschichten versehen sind.

Bei der Beschichtung von Gasturbinenschaufeln mit Heißgaskorrosionsschutzschichten treten häufig kleine Fehlstellen in Bauteiloberflächen auf. Diese Fehlstellen in der Beschichtung sind vielfach auf Oberflächendefekte der gegossenen Rohschaufel zurückzuführen, die sich beim Beschichten in die Schutzschicht fortsetzen und stellenweise vergrößern. Derartige Fehlstellen in der Beschichtung stellen Schwachstellen für den Korrosionsangriff beim späteren Betrieb im beispielsweise Heißgaskanal eines Triebwerks dar. Aber auch Fehler, die direkt bei der Beschichtung ausgebildet werden, können als Schadstellen erkannt werden und wirken sich in gleicher Weise negativ auf die Korrosionsfestigkeit aus. Ein bekanntes Verfahren zur Reparatur von Fehlstellen in Bauteiloberflächen von Triebwerksteilen, die dem Heißgasstrom ausgesetzt sind und die mit Heißgaskorrosionsschutzschichten versehen sind (JP-A-4032546), weist die folgenden Schritte auf: Einformen einer Vertiefung; Aufbringen von Beschichtungsmaterial des Typs MCrAlY mit M aus der Gruppe Metalle in die Vertiefung, und dann konturgenaues Angleichen des Körpers an die Bauteiloberfläche und Wärmebehandeln des Bauteils.

Aufgabe der Erfindung ist es, ein Verfahren anzugeben, mit dem derartige Oberflächenfehler so nachbearbeitet werden können, daß eine geschlossene und unversehrte Korrosionsschutzschicht wiederhergestellt wird und dieses Verfahren auch für den Einsatz bei betriebsbedingten Beschädigungen der Beschichtung zur Reparatur herangezogen werden kann.

Diese Aufgabe wird durch die folgenden Verfahrensschritte gelöst:
a) Einformen oder Einschleifen einer Vertiefung mittels eines Werkzeugs, das kugelförmige Vertiefungen geringer Tiefe bei gleichzeitig großen Sehnenradius ermöglicht unter Ausräumen der Fehlstelle der Beschichtung des Typs MCrAlX mit M aus der Gruppe der Metalle und X aus der Gruppe der seltenen Erden sowie unter Ausräumen von Fehlstellen an der Bauteiloberfläche des Grundmaterials,
b) Einlegen eines paßgenauen Körpers aus Beschichtungsmaterial in die Vertiefung,
c) Fügen des paßgenauen Körpers in der Vertiefung und
d) konturgenaues Angleichen des Körpers an die Bauteiloberfläche und Wärmebehandeln des Bauteils.

Von besonderer Bedeutung ist bei diesem Reparaturverfahren, daß als Körper vorgeformte paßgenaue Teile aus Beschichtungsmaterial eingesetzt werden, da hiermit ein aufwendiges Abätzen der fehlerhaften Beschichtung und eine Wiederholung des aufwendigen Beschichtungsvorgangs vermieden werden und die Beschichtung mit ihrer ursprünglich eingesetzten Materialzusammensetzung unmittelbar an den Fehlstellen neu eingebracht wird. Diese Lösung hat den weiteren Vorteil, daß die Beschichtung ungestört wiederhergestellt wird und je nach Tiefe der Fehlstelle auch Defekte in der Oberfläche des Bauteilwerkstoffs, wie beispielweise Gußporen ausgeräumt werden können, die anschließend mit dem Werkstoff der Beschichtung durch den paßgenauen Körper aus Beschichtungswerkstoff aufgefüllt werden. Ferner hat dieses Verfahren den Vorteil, daß es schnell, gezielt und für eine Massenfertigung kostengünstig angewandt werden kann. Außerdem können die Qualitätsanforderungen an die ursprüngliche Beschichtung herabgesetzt werden, so daß der Ausschuß minimiert werden kann, zumal selbst durch Gußporen bedingter Ausschuß verwendet oder vermindert werden kann.

Die Vertiefung wird vorteilhaft kantenfrei mit fließenden Konturen eingebracht, um Spannungsspitzen oder Kerbwirkungen in der Vertiefung zu vermeiden, so daß das Bauteil nicht geschwächt wird. Dazu wird die Vertiefung vorzugsweise kugelförmig eingeformt oder eingeschliffen, so daß die Vertiefung einer eingearbeiteten Kugelkappe von geringer Tiefe bei gleichzeitig großem Sehnenradius ähnelt.

Bei einer bevorzugten Durchführung des Verfahrens wird als eingepaßter Körper ein Kugelabschnitt verwendet, der den gleichen Kugelradius wie die Kugelkappe aufweist, dessen Höhe jedoch geringfügig größer als die Tiefe der Vertiefung ist. Dieser eingepaßte Körper kann damit vorteilhaft einen Materialschwund, der eventuell beim Fügen auftritt ausgleichen.

Der Körper wird vorzugsweise beim Fügen einem Anpressdruck ausgesetzt. Dieser Anpreßdruck kann beim bevorzugten Fügen mittels Widerstandsschweißen vorteilhaft durch die Schweißelektrode aufgebracht werden. Bei einer Fügung durch Reibschweißen wird er unmittelbar von der Reibschweißmechnik aufgebracht, während beim Fügen durch Hartlöten eine zusätzliche Vorrichtung zum Aufbringen eines Anpressdrucks erforderlich wird.

In einer weiteren bevorzugten Durchführung des Verfahrens wird als Beschichtungsmaterial und als Material des Körpers MCrAlX mit M aus der Gruppe der Metalle und X aus der Gruppe der seltenen Erden eingesetzt. Besonders bei diesem Beschichtungsmaterial zeigt sich die hohe Wirtschaftlichkeit des Verfahrens, da der Beschichtungsprozess für MCrAlX-Schichten äußerst aufwendig und kostenintensiv ist und sich die erfindungsgemäße einfache Nachbearbeitung oder Reparatur der Fehlstellen in der Beschichtung rechnet.

Besonders vorteilhaft wird das Verfahren bei der bevorzugten Nachbearbeitung oder Reparatur von Schaufelblättern, Mantelringsegmenten, Gehäuseinnenwandsegmenten, Schaufelfußplattformen oder Segmenten auf dem Außenumfang von Rotorscheiben eingesetzt.

Mit den nachfolgenden Figuren werden Ausführungsformen der vorliegenden Erfindung erläutert.
- Fig. 1: zeigt eine Reparatureinrichtung
- Fig. 2: zeigt eine Beschichtung mit Fehlstellen
- Fig. 3: zeigt eingearbeitete Vertiefungen im Bereich der Fehlstellen.

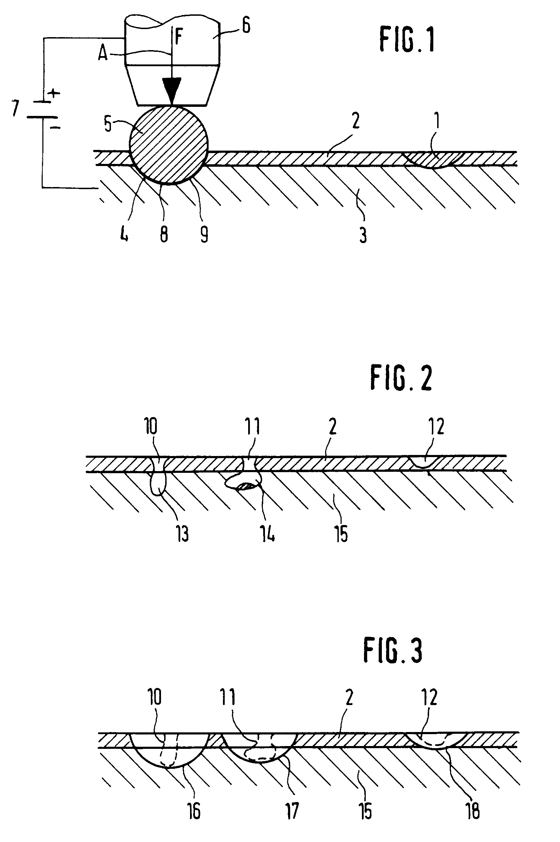

Fig. 1 zeigt eine Reparatureinrichtung mit einer bereits bearbeiteten Reparaturstelle 1 in der Beschichtung 2, die sich gerade noch nicht in das beschichtete Bauteil 3 erstreckt und einer zweiten vorbereiteten Reparaturstelle 4, in die gerade ein paßgenauer Körper 5 eingelegt worden ist. Die Reparaturzone erstreckt sich an der Reparaturstelle 4 bis in den Werkstoff des beschichteten Bauteils hinein, jedoch ist die Vertiefung kantenfrei und wird vollständig vom paßgenauen kugelförmigen Körper 5 ausgefüllt. Beim Anlegen einer elektrischen Spannung einer Stromquelle 7 zwischen einer Elektrode 6, die mit einer Kraft F in Pfeilrichtung A den kugelförmigen Körper 5 in die Vertiefung 8 preßt, bildet sich eine Widerstandsschweißzone 9 zwischen paßgenauem Körper 5 und der Oberfläche in der Vertiefung 8 aus, in die der paßgenaue Körper unter der Anpreßkraft F einschmilzt. Ein konturgenaues Angleichen des Körpers 5 an die Bauteiloberfläche und ein Wärmebehandeln des Bauteils. schließen sich an, um Beschichtung und Bauteil vollständig auszuheilen. Zur Vereinfachug wird in Fig. 1 als paßgenauer Körper 5 eine Vollkugel aus Beschichtungsmaterial dargestellt. Zur Materialersparnis und zur Verbesserung der Stromführung werden jedoch als paßgenaue Körper 5 Halbkugeln oder Kugelabschnitte verwendet.

Fig. 2 zeigt eine Beschichtung, die Fehlstellen 10, 11, 12 aufweist, welche teilweise auf Gußporen 13, 14 zurückzuführen sind und teilweise Fehlstellen 12 sind, die sich direkt beim Beschichten ausbilden. Das Vorbereiten dieser Fehlstellen für eine Reparatur zeigt Fig. 3. Durch Einformen oder Einschleifen von unterschiedlich eingearbeiteten Vertiefungen 16, 17, 18 werden die Fehlstelle 12 in der Beschichtung 1 und soweit erforderlich die Fehlstellen 10, 11 im Grundmaterial 15 des Bauteils ausgeräumt Dabei deuten die gestrichelten Linien in Fig. 3 die ursprüngliche Position und Lage der Fehlstellen 10, 11, 12 aus Fig. 2 an. In diesem Fall wurden alle drei Vertiefungen 16, 17, 18 mit dem gleichen Kugelradius einer kugelförmig gerundeten Fräserspitze eingebracht. Die Vertiefungen können aber auch durch Formätzen mittels elektrochemischer Abtragung oder durch Kugelschleifen mittels Diamantschleifpaste eingebracht werden. Ferner kann der Kugeldurchmesser der Fehlstellentiefe angepaßt werden, um möglichst fließende Übergänge zwischen Grundmaterial und Beschichtungsmaterial zu schaffen. Dazu wächst der Kugelradius mit zunehmender Fehlstellentiefe.

Nach dem Fügen des paßgenauen Körpers in der vorbereiteten Vertiefung wird der Körper konturgenau an die Bauteiloberfläche angeglichen. Abschließend wird eine Wärmebehandelung des Bauteils angeschlossen, bei der das Bauteil insbesondere im Bereich der Schweiß- oder Lötzone spannungsfrei geglüht wird.

## Patentansprüche

1. Verfahren zur Nachbearbeitung oder Reparatur von Fehlstellen (10, 11, 12) in Bauteiloberflächen (3) von Triebwerksteilen, die dem Heißgasstrom ausgesetzt sind und die mit Heißgaskorrosionsschutzschicht versehen sind, mit folgenden Verfahrensschritten:
a) Einformen oder Einschleifen einer Vertiefung (8, 16, 17, 18) mittels eines Werkzeugs, das kugelförmige Vertiefungen (8, 16, 17, 18) geringer Tiefe bei gleichzeitig großem Sehnenradius ermöglicht unter Ausräumen der Fehlstelle der Beschichtung des Typs MCrAlX mit M aus der Gruppe der Metalle und X aus der Gruppe der seltenen Erden sowie unter Ausräumen von Fehlstellen an der Bauteiloberfläche des Grundmaterials,
b) Einlegen eines paßgenauen Körpers (5) aus Beschichtungsmaterial in die Vertiefung,
c) Fügen des paßgenauen Körpers (5) in der Vertiefung und
d) konturgenaues Angleichen des Körpers (5) an die Bauteiloberfläche und Wärmebehandeln des Bauteils.

2. Verfahren nach Anspruch 1, dadurch gekennzeichnet, daß die Vertiefung (8, 16, 17, 18) kugelförmig eingeformt oder eingeschliffen wird.

3. Verfahren nach Anspruch 1 oder 2, dadurch gekennzeichnet, daß als Körper Kugelabschnitte verwendet werden.

4. Verfahren nach einem der Ansprüche 1 bis 3, dadurch gekennzeichnet, daß der Körper beim Fügen einem Anpressdruck ausgesetzt wird.

5. Verfahren nach einem der Ansprüche 1 bis 4, dadurch gekennzeichnet, daß als Fügetechnik Elektroschweißen, Reibschweißen oder Hartlöten , vorzugsweise Widerstandsschweißen eingesetzt wird.

6. Verfahren nach einem der Ansprüche 1 bis 5, dadurch gekennzeichnet, daß als Beschichtungsmaterial und als Material des Körpers MCrAlX mit M aus der Gruppe der Metalle und X aus der Gruppe der seltenen Erden eingesetzt wird.

7. Anwendung des Verfahrens nach einem der Ansprüche 1 bis 6 zur Nachbearbeitung oder Reparatur von Schaufelblättern, Mantelringsegmenten, Gehäuseinnenwandsegmenten, Schaufelfußplattformen oder Segmenten auf dem Außenumfang von Rotorscheiben.

## Claims

1. Method for the correction or repair of defects (10, 11, 12) in component surfaces (3) of driving mechanism parts that are exposed to the flow of hot gas and are provided with a hot gas anti-corrosive layer, which method comprises the following steps:
a) moulding in or grinding in a depression (8, 16, 17, 18) by means of a tool that enables spherical depressions (8, 16, 17, 18) of shallow depth yet at the same time large chord radius to be made, in so doing eliminating the defect of the MCrAlX type coating, where M is selected from the group of metals and X is selected from the group of rare earths, and in so doing eliminating defects at the surface of the base material of the component,
b) introducing an exactly fitting body (5) of coating material into the depression,
c) joining the exactly fitting body (5) in the depression,
d) matching the body (5) exactly to the contour of the component surface, and heat-treating the component.

2. Method according to claim 1, characterised in that the depression (8, 16, 17, 18) is moulded or ground in in the form of a sphere.

3. Method according to claim 1 or 2, characterised in that spherical segments are used as bodies.

4. Method according to any one of claims 1 to 3, characterised in that the body is exposed to a contact pressure during joining.

5. Method according to any one of claims 1 to 4, characterised in that electric-arc welding, friction welding or brazing, preferably resistance welding, is used as joining technique.

6. Method according to any one of claims 1 to 5, characterised in that MCrAlX, where M is selected from the group of metals and X is selected from the group of rare earths, is used as coating material and as material of the body.

7. Use of the method according to any one of claims 1 to 6 for correction or repair of blades, casing ring segments, housing inner wall segments, blade footing platforms or segments on the outer circumference of rotor blades.

## Revendications

1. Procédé de correction et/ou de réparation de défauts (10, 11, 12) à la surface de pièces (3) de moteurs exposées à un flux de gaz chaud et comportant une couche de protection anticorrosion au gaz chaud, comprenant les étapes suivantes :
a) mise en forme ou taille d'une cavité (6, 16, 17, 18) à l'aide d'un outil qui permet des cavités sphériques (8, 16, 17, 18) de faible profondeur et de rayon important, en dégageant le point du défaut dans le revêtement de type (MCrAlX) M venant du groupe des métaux et X du groupe des terres rares ainsi que dégagement des défauts à la surface de la pièce de la matière de base,
b) mise en place d'un corps ajusté (5) en matériau de revêtement dans la cavité,
c) réunion du corps ajusté (5) dans la cavité et
d) mise à niveau du corps (5) et de la surface de la pièce et traitement thermique de la pièce.

2. Procédé selon la revendication 1,
caractérisé en ce que
la cavité (8, 16, 17, 18) est de forme ou de taille sphérique.

3. Procédé selon l'une quelconque des revendications 1 et 2,
caractérisé en ce que
le corps est un segment de sphère.

4. Procédé selon l'une des revendications 1 à 3,
caractérisé en ce que
le corps est exposé à une pression d'application lors de l'assemblage.

5. Procédé selon l'une des revendications 1 à 4,
caractérisé en ce que
comme technique d'assemblage on utilise l'électrosoudage, le soudage par friction ou le brasage et de préférence le soudage à basse résistance.

6. Procédé selon l'une quelconque des revendications 1 à 5,
caractérisé en ce que
comme matériau de revêtement et comme matériau pour le corps, MCrAlX est mis en oeuvre avec M venant du groupe des métaux et X du groupe des terres rares.

7. Application du procédé selon l'une quelconque des revendications 1 à 6, à la correction ou à la réparation des ailettes d'aube, des segments d'anneaux à enveloppe, des segments de parois intérieures de boîtier, des plates-formes de talon d'aube ou de segments sur la périphérie extérieure des disques de rotor.
